# EUROPÄISCHE PATENTANMELDUNG

(11) **EP 4 075 215 A1**
(43) Veröffentlichungstag der Anmeldung: **19.10.2022**
(21) Anmeldenummer: 22168547.2
(22) Anmeldetag: 14.04.2022
(51) Int. Cl.: G05B 19/042, G05B 19/416

(54) **VERFAHREN ZUR OBERFLÄCHENBEARBEITUNG EINES WERKSTÜCKS, SOWIE HYBRIDE MESS- UND BEARBEITUNGSMASCHINE**

(30) Priorität: 16.04.2021 DE 102021109714
(71) Anmelder: Fooke GmbH, 46325 Borken (DE)
(72) Erfinder:
(74) Vertreter: Habbel, Ludwig

(57) **Zusammenfassung**

Bei einem Verfahren zur Oberflächenbearbeitung eines Werkstücks, wobei ein Messzeug entlang einer Oberfläche des Werkstücks bewegt wird und nacheinander die Materialstärke verschiedener Bereiche des Werkstücks mittels des Messzeugs ermittelt werden, und wobei ein Werkzeug entlang dieser Oberfläche des Werkstücks bewegt wird und nacheinander dieselben Bereiche des Werkstücks mittels des Werkzeugs bearbeitet werden, schlägt sie Erfindung vor, dass das Messzeug und das Werkzeug gleichzeitig entlang der Oberfläche des Werkstücks bewegt werden und die jeweils für eine bestimmte Stelle ermittelte Materialstärke des Werkstücks für die Bearbeitung des Werkstücks berücksichtigt wird, indem das Werkzeug entsprechend der jeweiligen Materialstärke der zu bearbeitenden Stelle gesteuert wird. Weiterhin schlägt die Erfindung eine hybride Mess- und Bearbeitungsmaschine vor.

## Beschreibung

Die Erfindung betrifft ein Verfahren zur Oberflächenbearbeitung eines Werkstücks, sowie eine hybride Mess- und Bearbeitungsmaschine.

Ein gattungsgemäßes Verfahren ist aus der Praxis bekannt. Beispielsweise im Bereich der Flugzeugindustrie werden großflächige Aluminiumtafeln, beispielsweise mit einer Länge bis zu 16 m, zur Herstellung des Flugzeugrumpfes verwendet. Die Rumpfhülle muss bereichsweise eine gewisse Materialstärke aus Festigkeitsgründen aufweisen. In anderen Bereichen ist eine geringere Materialstärke ausreichend. Aus Gründen der Gewichtsersparnis werden daher die Aluminiumtafeln großflächig bearbeitet und dort auf die geringere Materialstärke reduziert, wo dies nicht aus Festigkeitsgründen erforderlich ist. Chemische Verfahren zum Materialabtrag gelten in ihrer derzeitigen Ausprägung als umweltbelastend, so dass ein spanabhebender Materialabtrag durch Fräsen üblicherweise bevorzugt wird.

Bei der mechanischen Bearbeitung ergibt sich das Problem, dass durch den Kontakt mit dem Werkzeug, also dem Fräskopf, das bearbeitete Werkstück verformt werden kann, beispielsweise weil das Werkstück nicht vollflächig auf einer Spann- bzw. Halteeinrichtung aufliegt. Dem wird dadurch zu begegnen versucht, dass das Werkstück möglichst unbeweglich eingespannt wird, beispielsweise in einer sogenannten Hardtooling-Spannvorrichtung, der das Werkstück wenn möglich vollflächig anliegen sollte. Angesichts der Größe der Werkstücke sind derartige Spannvorrichtungen mit sehr hohen Kosten verbunden.

Als Alternative ist es bekannt, Spanntische mit einer Vielzahl von höhenverstellbaren Aktuatoren zu verwenden, die jeweils mit einem Auflage- und Spannpunkt, z. B. in Form eines Vakuumsaugers, versehen sind. Durch die unterschiedliche Einstellbarkeit der vielen Aktuatoren können unterschiedliche dreidimensionale Spannformen geschaffen werden, so dass dieselbe Spanneinrichtung für eine Vielzahl unterschiedlicher Werkstücke benutzt werden kann. Allerdings tritt angesichts der Vielzahl der Aktuatoren in der Praxis immer wieder das Problem auf, dass das Werkstück einem oder mehreren der vielen Aktuatoren nicht exakt anliegt, sondern beispielsweise ein Luftspalt zwischen dem Werkstück und dem Saugkopf des Aktuators verbleibt. Auch bei der Hardtooling-Spannvorrichtung kann ein solcher Luftspalt auftreten.

Weiterhin kann eine Abweichung zwischen dem Auflage- / Spannpunkt am Aktuator und der tatsächlichen Ist-Geometrie des Bauteils bestehen. Durch eine solche Abweichung entstehen ungewollte Spannungen, die zu erheblichen Problemen bei der Bearbeitung führen können und teils erst ersichtlich werden, nachdem die Werkstückaufspannung gelöst worden ist.

Angesichts der in der Luftfahrt geforderten Präzision bei der Bearbeitung der Werkstücke wird in der Praxis zunächst die Materialstärke des gesamten Werkstücks messtechnisch erfasst, wobei die Messstellen beispielsweise in einem Raster voneinander entfernt liegen, das möglichst klein sein sollte, wobei in der Praxis beispielweise die Rasterpunkte quadratisch in Abständen von 10 x 10 cm liegen. Anschließend erfolgt die mechanische Bearbeitung des Werkstücks, so dass anhand der zuvor ermittelten Messdaten die Materialabtragung bereichsweise so gesteuert wird, dass präzise die gewünschte verbleibende Materialstärke des Werkstücks an der jeweiligen Stelle resultiert. Bei einem flächigen Materialabtrag reihen sich daher die einzelnen Stellen, an denen Material von dem Werkstück abgetragen wird, kontinuierlich aneinander.

Die Position des Werkzeugs kann mit hoher Genauigkeit bestimmt werden, so dass dementsprechend das Werkzeug im Raum gesteuert und geführt werden kann und eine bestimmte Eindringtiefe des Werkzeugs im Werkstück die gewünschte verbleibende Materialstärke des Werkstücks bewirkt. Das kann dazu führen, dass das Werkstück den geforderten Gewichts- sowie Stabilitätsanforderungen nicht entspricht oder gar beschädigt wird. Sollte das Werkstück allerdings bereichsweise nachgeben, so bewirkt die Position des Werkzeugs nicht die gewünschte Eindringtiefe des Werkzeugs an dieser Stelle und dementsprechend nicht den gewünschten Materialabtrag, so dass die gewünschte Reduzierung der Materialstärke des Werkstücks nicht erreicht wird und das Werkstück zu schwer bleibt. Und wenn im umgekehrten Fall das Werkstück der Spannvorrichtung nicht exakt anliegt, sondern sich im Raum näher zum Werkzeug hin befindet, so kann die vermeintliche Eindringtiefe des Werkzeugs an dieser Stelle einen zu hohen Materialabtrag bewirken, so dass die gewünschte und aus Sicherheitsgründen geforderte Materialstärke unterschritten wird das gesamte Werkstück nicht verwendbar, sondern Ausschuss ist.

In der Praxis haben sich daher iterative Verfahren herausgebildet, in denen zunächst wie oben erwähnt die Materialstärke des Werkstücks in einem vorgegebenen Raster erfasst wird, anschließend der Materialabtrag nicht in dem gesamten erforderlichen Maß erfolgt, sondern beispielsweise 0,5 mm weniger von der ursprünglichen Materialstärke abgetragen wird. Dies basiert auf der Überlegung, dass aufgrund der nun reduzierten Materialstärke das Werkstück leichter verformbar ist und sich dementsprechend perfekt an die Spannvorrichtung anlegt, aufgrund des an den Saugköpfen anliegenden Vakuums. In einem zweiten Bearbeitungsgang kann nun der Materialabtrag bis auf den gewünschten endgültigen Wert erfolgen. Ggf. kann dem zweiten Bearbeitungsgang auch noch eine zweite Vermessung des Werkstücks vorgeschaltet werden, um hochpräzise die tatsächliche Materialstärke des Werkstücks zu erfassen, die durch den ersten Bearbeitungsgang geschaffen wurde.

Abgesehen von dem erwähnten Anwendungsbeispiel, großflächig Material von einem großen Werkstück abzutragen, ergibt sich eine vergleichbare Problematik auch dann, wenn mit hoher Präzision Bohrungen in ein Werkstück eingebracht werden sollen, die nicht als Durchgangsbohrungen, sondern als Sackbohrungen ausgestaltet sind und dem Werkstück eine definierte Restwandstärke belassen sollen. Auch derartige Bohrungen werden im Rahmen des vorliegenden Vorschlags als Oberflächenbearbeitung des Werkstücks bezeichnet, da die Oberfläche zwar nicht flächig, aber punktuell an voneinander beanstandeten Stellen bearbeitet wird.

Aus der EP 1 514 638 A2 ist ein Verfahren zum Bearbeiten eines in einer Spannvorrichtung eingespannten Werkstücks bekannt, sowie eine dazu geeignete Vorrichtung.

Der Erfindung liegt die Aufgabe zugrunde, ein gattungsgemäßes Verfahren dahingehend zu verbessern, dass dieses in geringer Zeit und mit hoher Genauigkeit die Oberflächenbearbeitung eines Werkstücks ermöglicht. Weiterhin liegt der Erfindung die Aufgabe zugrunde, eine Maschine anzugeben, die eine solche vorteilhafte Bearbeitung des Werkstücks ermöglicht.

Diese Aufgabe wird durch ein Verfahren nach Anspruch 1 und durch eine hybride Mess- und Bearbeitungsmaschine nach Anspruch 7 gelöst. Vorteilhafte Ausgestaltungen sind in den Unteransprüchen beschrieben.

Die Erfindung schlägt mit anderen Worten vor, simultan während der Bearbeitung des Werkstücks die Materialstärke des Werkstücks an der Stelle zu ermitteln, die momentan bearbeitet wird. Sollte das Werkstück eine andere als die eigentlich vorgesehene Position im Raum einnehmen, beispielsweise weil es dem Druck des Werkzeugs nachgibt und sich im Raum bewegt, oder weil es der Spannvorrichtung nicht korrekt anliegt, so wird das Werkzeug nicht starr entlang einer zuvor programmierten Bewegungsbahn im Raum geführt, sondern folgt einer kompensierten, neu berechneten Bewegungsbahn, folgt also hinsichtlich der Zustelltiefe immer dem programmtechnisch vorgegeben Abstand zur Außenfläche (Aufspannfläche) des Bauteils. Fehler durch mangelhafte Aufspannung und / oder Nachgiebigkeiten des Bauteils führen somit zu keiner Zeit zu einer kritischen Abweichung der hergestellten Restwandstärke. Aus diesem Grund sind nicht mehrere Bearbeitungsdurchgänge erforderlich, so dass die Bearbeitung in vergleichsweise kurzer Zeit erfolgen kann. Weiterhin wird eine hohe Präzision bei der Bearbeitung des Werkstücks erreicht, weil der Messdurchgang nicht separat von dem Bearbeitungsdurchgang durchgeführt wird, was stets zu Ungenauigkeiten oder dergleichen führen kann, sondern vielmehr während der Bearbeitung die tatsächliche an der bearbeiteten Stelle vorhandene Materialstärke des Werkstücks erfasst wird und die Bearbeitung dementsprechend präzise bis zu der gewünschten verbleibenden Materialstärke des Werkstücks an dieser Stelle durchgeführt werden kann.

Sollte die Oberflächenbearbeitung beispielsweise darin bestehen, dass eine Beschichtung auf die Oberfläche des Werkstücks aufgetragen wird, wobei die Beschichtung in Abhängigkeit von der Materialstärke des Werkstücks unterschiedlich erfolgen soll, beispielsweise unterschiedlich dick, so kann auch in diesem Fall zeitsparend die Beschichtung bereits durchgeführt werden, wenn die Werkstückdicke messtechnisch ermittelt wird, da die Messung und die Oberflächenbearbeitung vorschlagsgemäß simultan durchgeführt werden. Dementsprechend kann eine unterschiedliche Beschichtungsdicke in Abhängigkeit von der gemessenen Materialstärke des Werkstücks erzeugt werden, und / oder es kann im Anschluss an den Auftrag der Beschichtung ohne die Notwendigkeit eines Werkzeugwechsels die Materialstärke der Beschichtung überprüft und ggf. durch das Auftragen zusätzlichen Beschichtungsmaterials nachgearbeitet werden. Wenn jedoch das Werkzeug als materialabtragendes Werkzeug ausgestaltet ist, kann mittels des erfindungsgemäßen Verfahrens eine auf einem Werkstück vorhandene Beschichtung durch das erfindungsgemäße Verfahren lokal oder vollflächig auf eine gewünschte Reststärke bzw. Beschichtungsdicke gebracht werden, oder um ein definiertes Maß abgetragen werden.

Besonders vorteilhaft eignet sich das erfindungsgemäße Verfahren, wenn das Werkzeug einen Bearbeitungskopf aufweist, der in Kontakt mit dem Werkstück gebracht wird, denn die eingangs erläuterten Beispiele aus der Luft- und Raumfahrtindustrie erfordern aufgrund der hohen Sicherheits- und Qualitätsanforderungen ansonsten einen hohen Bearbeitungsaufwand, der erstens durch das vorschlagsgemäße Verfahren erheblich reduziert werden kann, wobei zweitens besonders hohe Qualitätsanforderungen durch das Einhalten geringer Toleranzen erfüllt werden können.

Das Messzeug ist im Falle eines solchen Bearbeitungskopfes, der in Kontakt mit dem Werkstück gebracht wird, in dem Bearbeitungskopf angeordnet, so dass genau die Stelle messtechnisch erfasst werden kann, die momentan auch durch das Werkzeug bearbeitet wird. Die Position des Werkzeugs wird dementsprechend während der Bearbeitung anhand der Daten gesteuert, welche das Messzeug an dieser Stelle erfasst. Dabei werden die Daten über die momentane Materialstärke des Werkstücks an eine Auswertungsschaltung übertragen, die beispielsweise in einem Mikrocontroller verwirklicht sein kann. Die Auswertungsschaltung kann entweder unmittelbar in die Maschinensteuerung Bearbeitungsmaschine integriert sein, besonders vorteilhaft kann sie jedoch am oder im Bearbeitungskopf angeordnet sein, so dass bereits eine Datenverarbeitung in dieser Auswertungsschaltung erfolgen kann und die Datenübertragung zu einer Maschinensteuerung mit einem erheblich reduzierten Datenvolumen möglich ist. Das reduzierte Datenvolumen ist erstens aus Sicherheitsgründen vorteilhaft, da die Daten redundant und somit möglichst ausfallsicher übertragen werden können, und zweitens wird so eine möglichst schnelle Datenverarbeitung in der Maschinensteuerung unterstützt, so dass die Position des Werkzeugs in optimal kurzer Zeit an die tatsächlich an die Verhältnisse angepasst werden kann, welche an dieser momentan bearbeiteten Stelle im Werkstück herrschen, um die gewünschte verbleibende Materialstärke des Werkstücks an dieser Stelle präzise zu erreichen. Jedenfalls erzeugt die Auswertungsschaltung Ausgangssignale, und die Steuerung erzeugt Steuersignale, welche die Position des Werkzeugs im Raum bestimmen, und diese Position des Werkzeugs im Raum kann vorschlagsgemäß optimal an die Position des Werkstücks an dieser Stelle und an dessen Materialstärke an dieser Stelle angepasst werden.

Insbesondere wenn als Werkzeug zur mechanischen Bearbeitung des Werkstücks dient, beispielsweise wenn ein spanabhebendes Werkzeug verwendet wird wie z.B. ein Bohrer, ein Schleifwerkzeug oder ein Fräser, kann eine fehlerhafte Bearbeitung des Werkstücks zu dessen Ausschuss führen, so dass insbesondere bei derartigen Werkzeugen das vorschlagsgemäße Verfahren besonders vorteilhaft angewendet werden kann.

Die Messung der Materialstärke des Werkstücks kann vorteilhaft einseitig erfolgen, ohne ein Messelement auf der von dem Werkzeug abgewandten Rückseite des Werkstücks. Daher kann eine kontinuierliche und zügige, zeitsparende Bearbeitung des Werkstücks auch dann erfolgen, wenn das Werkstück auf seiner Rückseite mittels einer Vielzahl von Aktuatoren gehalten ist und dementsprechend eine Vielzahl von Stellen auf der Rückseite des Werkstücks nicht zugänglich ist, um beispielsweise eine zweiseitige Messung der Materialstärke zu ermöglichen. Beispielsweise kann die Messung der Materialstärke mittels eines Ultraschallmessverfahrens oder mithilfe eines Wirbelstrommesszeugs erfolgen, also unter Verwendung eines Wirbelstromsensors. Dies ermöglicht erstens die gewünschte einseitige Messung und liefert zweitens hochpräzise Messergebnisse. Drittens ist zwar ein Sensor erforderlich, der in das Werkzeug integriert werden muss, jedoch erfordert die Wirbelstrommessung kein mechanisches Messzeug wie z.B. einen Taster oder dergleichen, der neben dem Werkzeug dem Werkstück anliegen müsste, so dass es keine räumliche Konkurrenz mit dem Werkzeug gibt und vielmehr tatsächlich genau die Stelle messtechnisch erfasst werden kann, die momentan durch das Werkzeug bearbeitet wird.

Das Wirbelstrommessverfahren bietet zudem noch weitere Möglichkeiten: beispielsweise lassen sich damit auch Materialfehler wie Lunker oder Risse, aber auch unterschiedliche Materialhärten ermitteln. Daher könnten bei der Durchführung der Wirbelstrommessung gleichzeitig auch bestimmt Materialeigenschaften untersucht und eventuelle Materialfehler ermittelt und ausgewertet werden. Diese zusätzlichen Informationen können gegebenenfalls dazu herangezogen werden, die Bearbeitung des Werkstücks an der betreffenden Stelle zu beeinflussen, insbesondere aber können sie der Beurteilung und Dokumentation des Werkstücks im Hinblick auf die Qualitätssicherung dienen.

Vorteilhaft können die Messsignale in einer Ausgestaltung drahtlos an die Auswertungsschaltung übertragen werden. Auf diese Weise kann die Auswertungsschaltung im Abstand von dem rotierenden Werkzeug untergebracht werden, und es sind keine Schleifkontakte oder dergleichen zur Signalübertragung erforderlich.

In einer anderen Ausgestaltung kann vorgesehen sein, dass die Auswertungsschaltung in den Bearbeitungskopf der Bearbeitungsmaschine integriert ist und sich beispielsweise gemeinsam mit dem Werkzeug dreht. Auf diese Weise ist eine besonders zuverlässige Übertragung der Messsignale auf kürzestem Weg vom Sensor zur Auswertungsschaltung möglich. In diesem Fall kann vorteilhaft eine drahtlose Übertragung der Ausgangssignale von der Auswertungsschaltung zur Steuerung der Bearbeitungsmaschine vorgesehen sein. Diese Signalübertragung ist möglicherweise mit Problemen behaftet, beispielsweise aufgrund der mechanischen Belastung und der hohen Dynamik des Bearbeitungskopfes, zum Beispiel in Form hoher Drehzahlen des Werkzeugs von mehr als 10.000 min⁻¹ und ggf. etwa 20.000 min⁻¹, welchen Drehzahlen die Auswertungsschaltung ebenfalls ausgesetzt ist. Auf die Anwesenheit von Kühl- und Schmierstoffen an der Bearbeitungsstelle und im Umkreis von der Bearbeitungsstelle kann eine drahtlose Signalübertragung erschweren. Vorteilhaft ist in diesem Zusammenhang, dass nicht sämtliche Messdaten übertragen werden müssen, sondern dass vielmehr in der Auswertungsschaltung eine Auswertung und Aufbereitung der Messdaten erfolgt, so dass letztlich lediglich ein erheblich reduzierter Datenstrom als Ausgangssignale von der Auswertungsschaltung an die Steuerung der Bearbeitungsmaschine übertragen werden muss.

Mittels der erfindungsgemäßen Mess- und Bearbeitungsmaschine kann die Werkstückoberfläche bearbeitet werden: z. B. können Sack- oder Durchgangslöcher gebohrt werden, die Materialstärke durch Abtragen reduzieren, z.B. mittels eines Fräskopfes, oder es kann eine Beschichtung auf die Werkstückoberfläche aufgetragen oder bei einem beschichteten Werkstück die vorhandene Beschichtung abgetragen werden. Jedenfalls wird das Werkzeug relativ zur Werkstückoberfläche bewegt, z. B. über die Oberfläche des feststehenden Werkstücks bewegt, und dabei wird eine einseitige Messung am Werkstück auf der Seite durchgeführt, auf der sich das Werkzeug befindet, ohne dass ein Mess-Element auf der Rückseite des Werkstücks zur Durchführung der Messung erforderlich ist. Dadurch können mittels der erfindungsgemäßen Mess- und Bearbeitungsmaschine verschiedene Stellen entweder im Abstand voneinander - z.B. punktuell - bearbeitet werden, oder auch kontinuierlich aneinander anschließend - z.B. flächig bearbeitet werden.

Eine Bearbeitungsmaschine, die zur erfindungsgemäßen Oberflächenbearbeitung eines Werkstücks vorgesehen ist, ist dementsprechend als hybride Mess- und Bearbeitungsmaschine ausgestaltet, so dass keine separate Messeinrichtung erforderlich ist, die in separaten Messdurchgängen Materialstärke der Werkstücke erfasst. Vielmehr sind der Sensor einer solchen Messeinrichtung und der Werkzeugkopf der Bearbeitungsmaschine erfindungsgemäß gemeinsam in einem integrierten Maschinenkopf angeordnet, so dass der Bearbeitungskopf gleichzeitig auch den Messkopf der Bearbeitungsmaschine darstellt. Der Sensor liefert einen unabhängigen Messwert, der auch zur Qualitätssicherung, Qualitätsprüfung und eine Auswertung der Ist-Werte vor und nach der Bearbeitung genutzt werden kann. Somit können auch vor- und nachgeschaltete Prüfverfahren sowie der Aufwand und die Investitionen in reine Messmaschinen entfallen.

Die Messsignale des Messkopfes werden in einer Auswertungsschaltung ausgewertet und aufbereitet, und die Bewegungen des Werkzeugkopfes, nämlich des integrierten Bearbeitungskopfes, werden mittels einer automatischen Steuerung gesteuert, welche zur Übertragung der Ausgangssignale mit der Auswertungsschaltung drahtgebunden oder drahtlos verbunden ist. Dementsprechend kann anhand der Materialstärken-Messung, die an einer momentan bearbeiteten Stelle des Werkstücks durchgeführt wird, die Bearbeitung dieser Stelle des Werkstücks automatisch in der Art angepasst werden, dass die gewünschte reduzierte Materialstärke des Werkstücks präzise erreicht wird.

Die Energie, die für den Betrieb des Messzeugs und der Auswertungsschaltung erforderlich ist, kann entweder durch einen austauschbaren Energiespeicher bereitgestellt werden, beispielsweise in Form einer Batterie oder eines mehrfach wiederaufladbaren Akkumulators, Kondensators oder dergleichen. Im Rahmen regelmäßiger Wartungen, ggf. bei jedem Schichtwechsel, kann dieser Energiespeicher gegen einen frischen oder ausreichend aufgeladenen Energiespeicher ausgewechselt werden. Oder der Maschinenkopf kann zwischen zwei Bearbeitungsgängen in eine Ruhestellung bewegt werden, in welcher der im Bearbeitungskopf angeordnete Energiespeicher an eine Ladestation angenähert ist und entweder kontaktlos geladen werden kann, z.B. induktiv, oder wo er Ladekontakten anliegt, so dass er jedenfalls in dieser Ruhestellung aufgeladen werden kann. Besonders vorteilhaft kann allerdings vorgesehen sein, dass die Mess- und Bearbeitungsmaschine über einen Generator verfügt, der in dem integrierten Maschinenkopf angeordnet ist und elektrische Energie aufgrund der vom Maschinenkopf durchgeführten Bewegungen erzeugt, beispielsweise aufgrund der Rotationsenergie, z. B. durch Drehzahländerungen jeweils dann, wenn das Werkzeug in Drehung versetzt oder abgebremst wird. Die dabei gewonnene Energie kann in einem elektrischen Pufferspeicher zwischengespeichert werden, so dass das Messzeug und die Auswertungsschaltung während der Bearbeitungsgänge stets kontinuierlich mit ausreichend Energie versorgt werden können, um die Messung der Materialstärke mittels eines Sensors durchzuführen, um anschließend die Messsignale in der Auswertungsschaltung auswerten und aufbereiten zu können, und um schließlich von der Auswertungsschaltung Ausgangssignale zur Steuerung der Bearbeitungsmaschine übertragen zu können.

Am Beispiel eines als Fräser ausgestalteten Werkzeugs kann die erfindungsgemäße Ausgestaltung der Mess- und Bearbeitungsmaschine und die dadurch erzielbaren Vorteile wie folgt beschrieben werden: Durch die Integration des Messkopfes, z.B. eines Sensors, in das rotierende, als Fräser ausgestaltete Werkzeug, kann synchron das Werkstück gefräst und die dabei resultierende Restwandstärke des Werkstücks gemessen werden. Falls die Bearbeitung des Werkstücks droht, außerhalb der Toleranzen zu geraten, wird ein Signal an die Steuerung der Mess- und Bearbeitungsmaschine gegeben so dass der Mess- und Bearbeitungskopf der Maschine nachgeführt und die Achsposition des Fräswerkzeugs angepasst wird. Auf diese Weise ist zu jeder Zeit während der Bearbeitung des Werkstücks sichergestellt, dass das Bauteil auf Sollmaß gefräst wird. Es sind keine nachgelagerten Mess- und Fräsarbeiten nötig.

Dementsprechend ermöglicht die erfindungsgemäße Mess- und Bearbeitungsmaschine drei Vorteile: Erstens kann der erforderliche Zeitaufwand für die Bearbeitung des Werkstücks reduziert werden. Zweitens wird durch die ständige Überwachung des Fräsprozesses eine Erzeugung von Ausschuss vermieden. Drittens können die Anforderungen an die Aufspannung des Werkstücks verringert werden, da eine gewisse Nachgiebigkeit des Werkstücks während seiner Bearbeitung automatisch berücksichtigt und ausgeglichen wird. Die erwähnten Vorteile sind sämtlich zumindest wirtschaftlicher Natur, aber auch ressourcenschonend, z.B. wenn durch eine Verringerung des Ausschusses und durch eine mit weniger Material herstellbare Aufspannung ein geringerer Materialbedarf für die Herstellung einer bestimmten Anzahl von Werkstücken erzielt werden kann. Wenn eine Aufspannung mit weniger als der bislang üblichen Anzahl von Vakuum-Saugern verwendet werden kann, kommt auch ein energetischer Vorteil hinzu, da nämlich der Aufwand zur Erzielung des jeweiligen Vakuums angesichts der geringeren Anzahl von Spannstellen reduziert werden kann.

Die Erfindung wird anhand rein schematischer Darstellungen nachfolgend näher erläutert. Dabei zeigt
- Fig. 1: einen Längsschnitt durch einen Mess- und Bearbeitungskopf einer Mess- und Bearbeitungsmaschine, und
- Fig. 2: in Art eines schematischen Schaltbilds die Signalverarbeitung während des Betriebs des Mess- und Bearbeitungskopfes von Fig. 1.

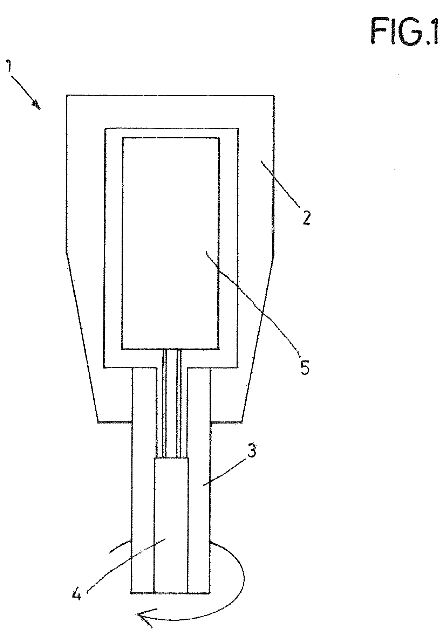

In Fig. 1 ist ausschnittsweise ein Bearbeitungskopf 1 einer Mess- und Bearbeitungsmaschine dargestellt, wobei der Bearbeitungskopf 1 als Werkzeugkopf und gleichzeitig auch als Messkopf dieser Mess- und Bearbeitungsmaschine ausgestaltet ist. Der Bearbeitungskopf 1 weist eine Werkzeugaufnahme 2 auf. In die Werkzeugaufnahme 2 ist ein Werkzeug 3 eingesetzt, welches bei dem dargestellten Ausführungsbeispiel als Fräser ausgestaltet ist, der um seine Längsachse drehangetrieben ist und dessen Drehbeweglichkeit durch einen gebogenen Pfeil angedeutet ist.

Das Werkzeug 3 stellt als Kombinationsbauteil gleichermaßen auch ein Messzeug dar, denn in dem vorderen Bereich des Werkzeugs 3, wo das Werkzeug 3 in Kontakt mit einem Werkstück kommt, ist in das Werkzeug 3 ein Sensor 4 integriert. Der Bearbeitungskopf 1 der Mess- und Bearbeitungsmaschine stellt daher gleichzeitig auch einen Messkopf der Maschine dar. Bei dem dargestellten Ausführungsbeispiel ist der Sensor 4 als Wirbelstromsensor ausgestaltet. Weiterhin ist in dem Bearbeitungskopf 1 eine elektronische Auswertungsschaltung 5 untergebracht, die bei dem dargestellten Ausführungsbeispiel als Mikrocontroller ausgestaltet ist. Innerhalb der Werkzeugaufnahme 2 ist weiterhin eine Einrichtung zur drahtlosen Signalübertragung angeordnet, die bei dem dargestellten Ausführungsbeispiel in den Mikrocontroller integriert ist, also Teil der Auswertungsschaltung 5 ist und daher nicht eigens dargestellt ist.

Abweichend von dem dargestellten Ausführungsbeispiel kann auch vorgesehen sein, dass innerhalb des Bearbeitungskopfes 1 lediglich die Einrichtung zur drahtlosen Signalübertragung angeordnet ist, so dass die vom Sensor 4 gewonnenen Messsignale ohne weitere Aufbereitung zu einer Auswertungsschaltung übermittelt werden können, die sich außerhalb des Bearbeitungskopfes 1 befindet.

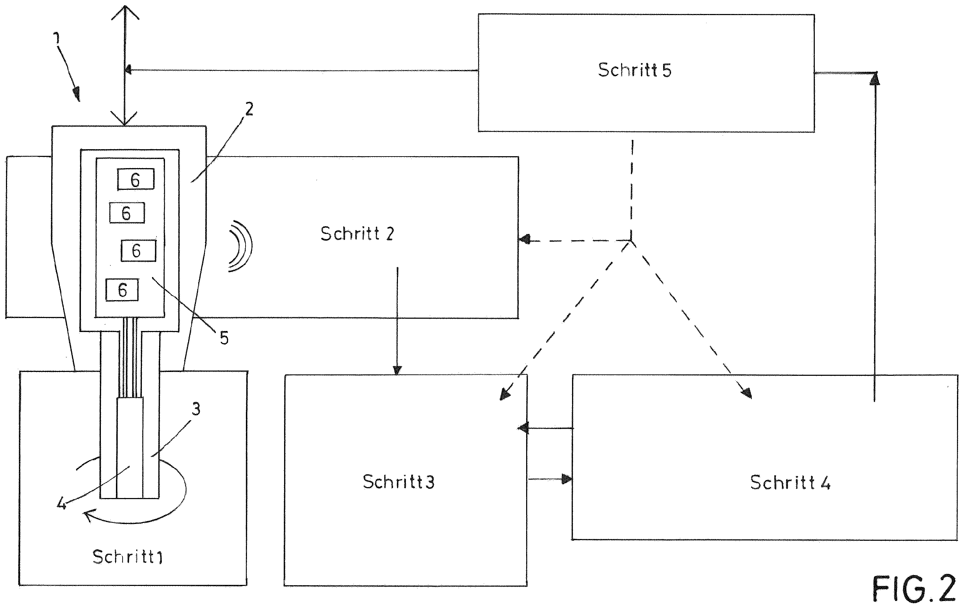

In Fig. 2 ist der Bearbeitungskopf 1 ebenso ausschnittsweise dargestellt wie in Fig. 1. Die Höhenbeweglichkeit der Werkzeugaufnahme 2 und damit des Bearbeitungskopfes 1 ist durch einen Doppelpfeil angedeutet. Die unterschiedlichen Prozessoren, Speichermodule und andere Komponenten der Auswertungsschaltung 5 sowie der Einrichtung zur Signalübertragung sind in Fig. 2 jeweils schematisch mit 6 angedeutet.

Die einzelnen Prozessschritte bei der Durchführung des erfindungsgemäßen Verfahrens und bei der Anwendung der Mess- und Bearbeitungsmaschine bestehen entsprechend der Darstellung in Fig. 2 darin, dass in einem Schritt 1 "Signalgewinnung" Messsignale des Wirbelstrom- Sensors 4 gewonnen werden, welcher beispielsweise die Dicke eines mit dem Fräser- Werkzeug 3 bearbeiteten Werkstücks wie z.B. eines großformatigen Aluminiumblechs an der jeweiligen Bearbeitungsstelle in Echtzeit misst.

In einem Schritt 2 "Signalübertragung" werden die gewonnenen Messwerte zunächst zur Auswertungsschaltung 5 übertragen, und anschließend von der Auswertungsschaltung 5 drahtlos zu einer außerhalb der Werkzeugaufnahme 2 angeordneten Maschinensteuerung der Mess- und Bearbeitungsmaschine 1 übertragen. Um eine hohe Übertragungssicherheit bei der drahtlosen Signalübertragung zu gewährleisten, beispielsweise durch die Aussendung redundanter Informationen, und um dabei gleichzeitig eine hohe Bearbeitungsgeschwindigkeit der Mess- und Bearbeitungsmaschine 1 zu ermöglichen, ist bei dem dargestellten Ausführungsbeispiel vorgesehen, möglichst kleine Datenpakete zu übermitteln. Daher erfolgt eine Aufbereitung der Messdaten bereits innerhalb des Bearbeitungskopfes 1, nämlich innerhalb der Auswertungsschaltung 5, so dass nicht die kompletten Rohdaten, sondern eine erheblich reduzierte, bereits aufbereitete Datenmenge übertragen werden muss.

Ein Schritt 3 "Aufbereitung" kann entweder vollständig außerhalb des Bearbeitungskopfes 1, vorteilhaft jedoch wenigstens teilweise und ggf. sogar vollständig in der Auswertungsschaltung 5 innerhalb des Bearbeitungskopfes 1 durchgeführt werden. Dieser dritte Schritt umfasst die Aufbereitung der vom Sensor 4 gewonnen Rohdaten, wobei diese Aufbereitung ihrerseits die UnterSchritte umfasst, die Signale zu demodulieren, zu filtern und zu kompensieren, und ggf. auch, die Daten zu visualisieren und einer Vorkalibrierung zu unterziehen.

In einem Schritt 4 "Analyse" werden die aufbereiteten Daten anschließend interpretiert, was typischerweise außerhalb des Bearbeitungskopfes 1 erfolgt und beispielsweise in einer ohnehin vorgesehenen elektronischen Maschinensteuerung der Mess- und Bearbeitungsmaschine durchgeführt werden kann.

In einem Schritt 5 "Regelung" werden die aufbereiteten und interpretierten bzw. analysierten Signale in die Maschinensteuerung integriert, so dass im Sinne einer Regelung Kompensationsbewegungen ausgeführt werden können, mit denen das Fräs- Werkzeug 3 anhand der ermittelten Messwerte in eine von einer Soll-Position abweichende, tatsächliche Bearbeitungsposition nachgeführt wird.

### Bezugszeichen:

- 1: Bearbeitungskopf
- 2: Werkzeugaufnahme
- 3: Werkzeug
- 4: Sensor
- 5: Auswertungsschaltung
- 6: Komponenten

## Patentansprüche

1. Verfahren zur Oberflächenbearbeitung eines Werkstücks, wobei ein Messzeug entlang einer Oberfläche des Werkstücks bewegt wird und nacheinander die Materialstärke verschiedener Bereiche des Werkstücks mittels des Messzeugs ermittelt werden,
und wobei ein Werkzeug (3) entlang dieser Oberfläche des Werkstücks bewegt wird und nacheinander dieselben Bereiche des Werkstücks mittels des Werkzeugs (3) bearbeitet werden,
**dadurch gekennzeichnet,**
**dass** das Messzeug und das Werkzeug (3) gleichzeitig entlang der Oberfläche des Werkstücks bewegt werden und die jeweils für eine bestimmte Stelle ermittelte Materialstärke des Werkstücks für die Bearbeitung des Werkstücks berücksichtigt wird, indem das Werkzeug (3) entsprechend der jeweiligen Materialstärke der zu bearbeitenden Stelle gesteuert wird.

2. Verfahren nach Anspruch 1,
**dadurch gekennzeichnet,**
**dass** das Werkzeug (3), welches in einem Bearbeitungskopf (3) einer Maschine angeordnet ist, in Kontakt mit dem Werkstück gebracht wird,
und **dass** das Messzeug in demselben Bearbeitungskopf angeordnet ist,
und **dass** das Werkzeug (3) anhand der während der Bearbeitung der Stelle erfassten Materialstärke-Daten gesteuert wird,
derart, dass vom Messzeug Messsignale an eine Auswertungsschaltung (5) übertragen werden,
und **dass** anhand von Ausgangssignalen der Auswertungsschaltung (5) Steuersignale an einen Antrieb des Werkzeugs (3) in der Art übertragen werden, das mittels der Steuersignale die Bewegung des Werkzeugs (3) gesteuert wird.

3. Verfahren nach Anspruch 1 oder 2,
**dadurch gekennzeichnet,**
**dass** als Werkzeug (3) ein spanabhebendes Bohr- oder Fräswerkzeug verwendet wird, das bei der Bearbeitung des Werkstücks in das Werkstück eindringt.

4. Verfahren nach einem der vorhergehenden Ansprüche,
**dadurch gekennzeichnet,**
**dass** als Messzeug ein Wirbelstrommesszeug verwendet wird.

5. Verfahren nach einem der vorhergehenden Ansprüche,
**dadurch gekennzeichnet,**
**dass** die Messsignale drahtlos an die Auswertungsschaltung (5) übertragen werden.

6. Verfahren nach einem der vorhergehenden Ansprüche,
**dadurch gekennzeichnet,**
**dass** die Ausgangssignale der Auswertungsschaltung (5) drahtlos an eine Steuerung übertragen werden, welche dazu bestimmt ist, das Werkzeug (3) und insbesondere dessen Position im Raum zu steuern.

7. Hybride Mess- und Bearbeitungsmaschine,
mit einem Werkzeug (3), das dazu bestimmt ist, eine Werkstückoberfläche zu bearbeiten,
und mit einem Messkopf, der dazu bestimmt ist, die Materialstärke des Werkstücks mittels einseitiger Messungen zu erfassen,
wobei der Messkopf und das Werkzeug (3) gemeinsam in einem integrierten Bearbeitungskopf (1) der Maschine angeordnet sind,
und wobei dem Messkopf eine Auswertungsschaltung (5) und dem Werkzeug (3) eine Steuerung zugeordnet sind, und die Steuerung signalübertragungswirksam derart mit der Auswertungsschaltung (5) verbunden ist, dass das Werkzeug (3) anhand der mittels des Messkopfes erfassten Materialstärke-Daten steuerbar ist.

8. Mess- und Bearbeitungsmaschine nach Anspruch 7,
**dadurch gekennzeichnet,**
**dass** das Werkzeug (3) als Bohrer oder Fräser ausgestaltet ist.

9. Mess- und Bearbeitungsmaschine nach Anspruch 7 oder 8,
**dadurch gekennzeichnet,**
**dass** der Messkopf einen Sensor (4) in Form eines Wirbelstromsensors aufweist.

10. Mess- und Bearbeitungsmaschine nach einem der Ansprüche 7 bis 9,
**dadurch gekennzeichnet,**
**dass** die Auswertungsschaltung (5) in dem integrierten Bearbeitungskopf (1) angeordnet ist.

11. Mess- und Bearbeitungsmaschine nach Anspruch 10,
**dadurch gekennzeichnet,**
**dass** die Auswertungsschaltung (5) dazu bestimmt ist, Ausgangssignale drahtlos an die Steuerung zu übertragen.

12. Mess- und Bearbeitungsmaschine nach Anspruch 10 oder 11,
**gekennzeichnet durch**
einen Generator, der in dem integrierten Bearbeitungskopf (1) angeordnet ist und dazu bestimmt ist, elektrische Energie aus der Bewegung des Bearbeitungskopfes (1) zu erzeugen,
wobei die Auswertungsschaltung (5) energieübertragungswirksam derart mit dem Generator verbunden ist, dass die zum Betrieb der Auswertungsschaltung (5) erforderliche Energie mittels des Generators erzeugbar und an die Auswertungsschaltung (5) übertragbar ist.
